Europäisches Patentamt

European Patent Office

Office européen des brevets

(11) Numéro de publication : **0 497 653 A1**

# (12) DEMANDE DE BREVET EUROPEEN

(21) Numéro de dépôt : **92400137.3**

(51) Int. Cl.⁵ : **C09K 11/61, C09K 11/58**

(22) Date de dépôt : **20.01.92**

(30) Priorité : **01.02.91 FR 9101167**

(43) Date de publication de la demande :
**05.08.92 Bulletin 92/32**

(84) Etats contractants désignés :
**AT BE CH DE DK ES GB GR IT LI LU NL SE**

(71) Demandeur : **L'EQUIPEMENT ET LA
CONSTRUCTION ELECTRIQUE en abrégé
E.C.E. Société dite :
157, rue Pelleport
F-75020 Paris (FR)**

(72) Inventeur : **Susset, Serge Emile Eugène
125 rue Albert Charrier, Boisragon
F-79260 La Creche (FR)**

(74) Mandataire : **Barnay, André François
Cabinet Barnay 80 rue Saint-Lazare
F-75009 Paris (FR)**

(54) Composition de substances actives pour la réalisation d'une couche électroluminescente d'une source lumineuse électroluminescente.

(57)    L'invention concerne des substances actives du type comportant du sulfure de zinc ou de cadmium et elle est essentiellement caractérisée en ce que les substances comportent également de l'acétate de cuivre, du bromure d'ammonium et du soufre.

EP 0 497 653 A1

Jouve, 18, rue Saint-Denis, 75001 PARIS

La présente invention concerne une composition d'une substance active pour la réalisation d'une couche électroluminescente d'une source lumineuse électroluminescente, ainsi qu'un procédé de fabrication d'une telle composition.

L'invention concerne plus particulièrement une substance active du type comportant notamment de l'acétate de cuivre et du bromure d'ammonium ainsi qu'éventuellement du sulfure de zinc.

Des substances électroluminescentes connues également appelées "phosphors" se présentant sous la forme de poudre permettent de réaliser des lampes émettant notamment dans le bleu, le vert et l'ambre.

Outre cette limitation quant aux couleurs d'émission, on constate que les durées de vie des lampes fabriquées avec les matériaux connus à ce jour sont très réduites. La demi-durée de vie d'une telle lampe est notamment généralement inférieure à 1800 heures.

L'invention a pour but de proposer de nouvelles compositions grâce auxquelles la durée de vie des lampes se trouve accrue de manière très importante et qui émettent dans les couleurs vert-jaune, jaune-vert, bleu, ainsi que dans l'infrarouge.

Dans ce but l'invention propose une composition d'une substance active du type comportant de l'acétate de cuivre et du bromure d'ammonium, caractérisée en ce qu'elle comporte en outre un élément choisi parmi le sulfure de cadmium, le séléniure de cadmium et l'iodure d'ammonium.

Selon d'autres caractéristiques de l'invention :
– le pourcentage en poids du sulfure de cadmium est sensiblement compris entre 5 et 13,5;
– le pourcentage en poids du sulfure de cadmium est sensiblement compris entre 93 et 94;
– la composition comporte du sulfure de zinc;
– le pourcentage en poids du sulfure de zinc est sensiblement compris entre 79 et 95;
– le pourcentage en poids de l'iodure d'ammonium est sensiblement compris entre 0,17 et 0,2;
– le pourcentage en poids du séléniure de cadmium est sensiblement compris entre 1,81 et 13,30;
– la composition comporte du soufre dont le pourcentage en poids est sensiblement compris entre 2,21 et 5,44;
– le pourcentage en poids du bromure d'ammonium est sensiblement compris entre 0,14 et 0,33;
– le pourcentage en poids de l'acétate de cuivre est sensiblement compris entre 0,2 et 2,3.

L'invention propose également un procédé de fabrication d'une composition d'une substance active conformément à l'invention, caractérisé en ce qu'il comporte une étape de cuisson sous atmosphère contrôlée.

Selon d'autres caractéristiques du procédé selon l'invention :
– l'étape de cuisson s'effectue à une température sensiblement égale à 720°C pendant environ deux heures sous atmosphère de soufre;
– l'étape de cuisson s'effectue à une température sensiblement comprise entre 930 et 950°C pendant une durée comprise entre 40 minutes et 1 heure 40 minutes sous atmosphère d'azote;
– l'étape de cuisson est suivie d'une étape de traitement thermique à l'air effectuée à une température comprise entre 550 et 720°C pendant une durée comprise entre 1 et 2 heures.

Différents exemples de compositions de substances actives réalisées conformément aux enseignements de l'invention sont donnés dans le tableau qui suit, dans lequel les différentes proportions des composants sont exprimées en pourcentage en poids.

TABLEAU

| PRODUIT | A | B | C | D | E | F | G | H | I |
|---|---|---|---|---|---|---|---|---|---|
| Sulfure de zinc | 79,84 | 83,38 | 87,80 | 88,62 | 88,41 | 80,11 | – | 94,73 | 94,67 |
| Sulfure de cadmium | – | 7,25 | 5,49 | 5,32 | 5,41 | 13,2 | 93,63 | – | – |
| Séléniure de cadmium | 13,30 | 1,81 | – | – | – | – | – | – | – |
| Acétate de cuivre | 2,21 | 1,81 | 1,83 | 1,33 | 1,35 | 1,82 | 1,40 | 0,2 | 0,44 |
| Bromure d'ammonium | 0,22 | 0,31 | 0,31 | 0,30 | 0,31 | 0,31 | 0,28 | 0,14 | 0,33 |
| Soufre | 2,21 | 5,44 | 4,57 | 4,43 | 4,51 | 4,55 | 4,68 | 4,74 | 4,38 |
| Iodure d'ammonium | – | – | – | – | – | – | – | 0,19 | 0,18 |
| Durée de cuisson (heures) | 2 | 2 | 2 | 2 | 2 | 2 | 2 | 1,40 | 0,40 |
| Température de cuisson (°C) | 700 | 720 | 720 | 720 | 720 | 720 | 720 | 950 | 930 |
| Atmosphère de cuisson | Soufre | Soufre | Soufre | Soufre | Soufre | Soufre | Soufre | Azote | Azote |
| Durée traitement à l'air (heures) | 1 | 1 | 2 | 1 | 1 | 1 | – | 1 | 1 |
| Température de l'air (°C) | 700 | 720 | 720 | 620 | 620 | 720 | – | 550 | 550 |
| Dopage au cuivre | NON | NON | NON | NON | NON | OUI | NON | OUI | OUI |
| Couleur | JAUNE | VERT-JAUNE | JAUNE-VERT | JAUNE-VERT | JAUNE-VERT | VERT-JAUNE | INFRAROUGE | BLEU | BLEU-VERT |

EP 0 497 653 A1

Une première composition préférée d'une substance active conformément à l'invention figure à la colonne A du tableau.

Il s'agit ici d'une substance active émettant dans le jaune et dont les coordonnées trichromatiques de la lumière émise sont x = 0,43 et y = 0,537. La longueur d'onde dominante de l'émission est égale à 570 nanomètres.

Des essais ont démontré que la demi-durée de vie de lampe électroluminescente fabriquée à partir de cette substance active est sensiblement égale à 9000 heures.

La substance active peut par exemple être élaborée de la manière suivante. On ajoute à 100 g de sulfure de zinc, 16,66 g de séléniure de cadmium, 2,77 g d'acétate-de cuivre, 0,278 g de bromure d'ammonium et 2,77 g de soufre.

Le mélange ainsi constitué subit une étape de cuisson à 700°C pendant environ deux heures sous atmosphère contrôlée de soufre.

L'opération de cuisson est suivie d'une opération de traitement thermique à l'air à 700°C pendant une durée d'environ une heure.

La substance active ainsi réalisée est ensuite lavée et séchée et se présente sous la forme d'une poudre prête à son emploi pour la réalisation d'une couche électroluminescente d'une lampe électroluminescente.

Un second mode de réalisation préféré d':une substance active conformément aux enseignements de l'invention est illustré à la colonne G du tableau.

Il s'agit ici d'une substance active qui émet dans l'infrarouge, c'est-à-dire dans la bande dont la longueur d'onde est comprise entre 750 et 950 nanomètres.

Cette substance active permet donc de manière très avantageuse de réaliser une source électroluminescente de signalisation qui est particulièrement discrète car son émission est invisible à l'oeil nu mais est perceptible, par exemple par des utilisateurs qui portent des lunettes à intensification de la lumière reçue.

La substance active de la colonne G du tableau peut par exemple être élaborée de la manière suivante. On ajoute à 100 g de sulfure de cadmium, 1,5 g d'acétate de cuivre, 0,3 g de bromure d'ammonium et 5 g de soufre.

Le mélange ainsi réalisé subit une étape de cuisson à 720°C pendant une durée d'environ deux heures sous une atmosphère contrôlée de soufre.

La substance ainsi réalisée est ensuite lavée et séchée pour être prête à son emploi.

Dans le cas des substances actives dont la composition est donnée aux colonnes F, H et I du tableau, leur procédé d'élaboration peut comporter une opération de dopage au cuivre qui a pour effet d'améliorer le phénomène d'électroluminescence des substances résultant de la première étape de cuisson.

Le dopage au cuivre est obtenu par adjonction d'acétale de cuivre après la première étape de cuisson, le mélange ainsi obtenu étant ensuite chauffé à l'air, par exemple à des températures de 550 à 720°C.

Lorsque l'étape de cuisson est effectuée sous atmosphère de soufre, il résulte de'cette opération une "adjonction" de soufre à la composition de la substance active. Le soufre ainsi introduit a pour objet d'éviter la désulfuration des sels existants mais il n'intervient pas dans la composition finale des substances.

## Revendications

1. Composition d'une substance active pour la réalisation d'une couche électroluminescente d'une source électroluminescente du type comportant de l'acétate de cuivre et du bromure d'ammonium, caractérisée en ce qu'elle comporte en outre au moins un élément choisi parmi le sulfure de cadmium, le séléniure de cadmium et l'iodure d'ammonium.

2. Composition selon la revendication 1, caractérisée en ce que le pourcentage en poids du sulfure de cadmium est sensiblement compris entre 5 et 13,5.

3. Composition selon la revendication 1, caractérisée en ce que le pourcentage du sulfure de cadmium est sensiblement compris entre 93 et 94.

4. Composition selon l'une quelconque des revendications 1 à 3, caractérisée en ce qu'elle comporte en outre du sulfure de zinc.

5. Composition selon la revendication 4, caractérisée en ce que le pourcentage en poids du sulfure de zinc est compris entre 79 et 95.

6. Composition selon l'une quelconque des revendications 1 à 4, caractérisée en ce que le pourcentage en poids de l'iodure d'ammonium est sensiblement compris entre 0,17 et 0,2.

7. Composition selon l'une quelconque des revendications 1 à 4, caractérisée en ce que le pourcentage en poids du séléniure de cadmium est sensiblement compris entre 1,81 et 13,30.

8. Composition selon la revendication 1, caractérisée en ce qu'elle comporte en outre du soufre dont le pourcentage en poids est sensiblement compris entre 2,21 et 5,44.

9. Composition selon l'une quelconque des revendications précédentes, caractérisée en ce que le pourcentage en poids du bromure d'ammonium est sensiblement compris entre 0,14 et 0,33.

10. Composition selon l'une quelconque des revendications précédentes, caractérisée en ce que le pourcentage en poids de l'acétate de cuivre est sensiblement compris entre 0,2 et 2,3.

11. Procédé de fabrication d'une composition selon l'une quelconque des revendications précédentes, caractérisé en ce qu'il comporte une étape de cuisson sous atmosphère contrôlée.

12. Procédé de fabrication selon la revendication 11, caractérisé en ce que l'étape de cuisson s'effectue à une température sensiblement égale à 720°C pendant environ 2 heures sous atmosphère de soufre.

13. Procédé selon la revendication 11 prise en combinaison avec la revendication 6, caractérisé en ce que l'étape de cuisson s'effectue à une température sensiblement comprise entre 930 et 950°C pendant une durée comprise entre 40 minutes et 1 heure 40 minutes sous atmosphère d'azote.

14. Procédé selon l'une quelconque des revendications 11 à 13, caractérisé en ce que l'étape de cuisson est suivie d'une étape de traitement thermique à l'air effectuée à une température comprise entre 550 et 720°C pendant une durée comprise entre 1 et 2 heures.

**Office européen des brevets**

# RAPPORT DE RECHERCHE EUROPEENNE

Numero de la demande

EP    92 40 0137

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WORLD PATENTS INDEX LATEST<br>Derwent Publications Ltd., London, GB;<br>AN 83-37455K<br>& JP-A-57 145 174 (NIPPON TELEG & TELEPH) 8 Septembre 1982<br>* abrégé * | 1-5,<br>8-11, 13 | C09K11/61<br>C09K11/58 |
| X | JOURNAL OF THE ELECTROCHEMICAL SOC.<br>vol. 129, no. 4, Avril 1982, USA<br>pages 813 - 815;<br>YOSHIO ITOH & AL: 'the electroluminescence of zns:cu,br phosphor' | 1,4,5,<br>8-11 | |

DOMAINES TECHNIQUES RECHERCHES (Int. Cl.5)

C09K

Le présent rapport a été établi pour toutes les revendications

| Lieu de la recherche | Date d'achèvement de la recherche | Examinateur |
|---|---|---|
| LA HAYE | 16 AVRIL 1992 | DROUOT M.C. |